# FASCICULE DE BREVET EUROPEEN

(11) **EP 3 836 267 B1**
(45) Date de publication et mention de la délivrance du brevet: **02.11.2022**
(21) Numéro de dépôt: 20212897.1
(22) Date de dépôt: 09.12.2020
(51) Int. Cl.: H01M 8/0228, H01M 8/124, H01M 8/0256, H01M 8/0258, C25B 9/65, H01M 8/12

(54) **PROCÉDÉ DE RÉALISATION D'UN COMPOSANT CONSTITUANT UN INTERCONNECTEUR D'ÉLECTROLYSEUR EHT OU DE PILE À COMBUSTIBLE SOFC**
VERFAHREN ZUR HERSTELLUNG EINES KOMPONENT BESTANDTEIL EINES INTERKONNEKTS EINER ELEKTROLYSEVORRICHTUNG SOEC ODER EINER BRENNSTOFFZELLE SOFC
PROCESS OF MANUFACTURING A COMPONENT CONSTITUTING AN INTERCONNECT OF ELECTROLYZER SOEC OR A FUEL CELL SOFC

(30) Priorité: 10.12.2019 FR 1914063
(43) Date de publication de la demande: 16.06.2021
(73) Titulaire: Commissariat à l'Energie Atomique et aux Energies Alternatives, 75015 Paris (FR)
(72) Inventeur: ORESIC, Bruno, 38054 GRENOBLE (FR); DI IORIO, Stéphane, 38054 GRENOBLE (FR)
(74) Mandataire: Nony

(56) Documents cités:
- EP-A2- 1 880 984
- EP-B1- 1 880 984
- WO-A1-2005/091408
- WO-A2-2013/171651
- FR-A1- 2 996 065
- FR-B1- 2 996 065
- ZHU WEI-ZHONG ET AL: "Perspectives on the metallic interconnects for solid oxide fuel cells", JOURNAL OF ZHEJIANG UNIVERSITY SCIENCE A, ZHEIJIANG UNIVERSITY PRESS, CN, vol. 5, no. 12, 1 décembre 2004 (2004-12-01), pages 1471-1503, XP036039903, ISSN: 1673-565X, DOI: 10.1631/JZUS.2004.1471 [extrait le 2004-12-01]
- LIM D P ET AL: "Influence of post-treatments on the contact resistance of plasma-sprayed La"0"."8Sr"0"."2MnO"3 coating on SOFC metallic interconnector", SURFACE AND COATINGS TECHNOLOGY, ELSEVIER BV, AMSTERDAM, NL, vol. 200, no. 5-6, 21 novembre 2005 (2005-11-21), pages 1248-1251, XP027608650, ISSN: 0257-8972 [extrait le 2005-11-21]
- BLUGAN ET AL: "Development of a tape casting process for making thin layers of Si"3N"4 and Si"3N"4+TiN", JOURNAL OF THE EUROPEAN CERAMIC SOCIETY, ELSEVIER SCIENCE PUBLISHERS, BARKING, ESSEX, GB, vol. 27, no. 16, 15 octobre 2007 (2007-10-15), pages 4789-4795, XP022282251, ISSN: 0955-2219, DOI: 10.1016/J.JEURCERAMSOC.2007.02.211

## Description

### Domaine technique

La présente invention concerne le domaine des piles à combustibles à oxydes solides (SOFC, acronyme anglais pour « Solid Oxide Fuel Cell ») et celui de l'électrolyse de l'eau à haute température (EHT, ou EVHT pour électrolyse de la vapeur d'eau à haute température, ou HTE acronyme anglais pour « High Temperature Electrolysis », ou encore HTSE acronyme anglais pour « High Temperature Steam Electrolysis ») également à oxydes solides (SOEC, acronyme anglais pour « Solid Oxide Electrolysis Cell »).

La présente invention concerne les composants en alliage métallique ou céramique constituant les dispositifs d'interconnexion qui sont soumis aux hautes températures et d'un côté à une atmosphère réductrice soit riche en vapeur d'eau H₂O/H₂ (hydrogène humide ou hydrogène riche en vapeur d'eau) dans les réacteurs d'électrolyse EHT soit riche en H₂ dans les piles SOFC, et de l'autre côté à une atmosphère oxydante soit riche en O₂ dans les réacteurs EHT, soit riche en air dans les piles SOFC dont une des fonctions est d'assurer le passage du courant électrique dans les réacteurs d'électrolyse EHT.

Les dispositifs d'interconnexion, électrique et fluidique, aussi appelés interconnecteurs ou encore plaques d'interconnexion, sont les dispositifs qui assurent la connexion en série de chaque cellule électrochimique (pile ou cellule d'électrolyse) dans l'empilement de piles et des réacteurs EHT, combinant ainsi la production de chacune. Les interconnecteurs assurent ainsi les fonctions d'amenée et collecte de courant et délimitent des compartiments de circulation (distribution et/ou la collecte) des gaz.

En sus de ces fonctions, les interconnecteurs doivent pouvoir résister à la corrosion dans les atmosphères qui peuvent être très agressives (oxydantes ou réductrices) dans des gammes de températures très élevées, typiquement comprises entre 600 et 900°C, telles que les atmosphères riches en vapeur d'eau H₂O/H₂ du côté cathode des électrolyseurs EHT, corrosion qui peut être néfaste pour la durabilité de ces derniers.

En outre, les interconnecteurs doivent avoir dans ces atmosphères un comportement thermomécanique proche de celui des cellules électrochimiques afin de conserver une bonne étanchéité entre compartiments aux cathodes, dits compartiments cathodiques et compartiments aux anodes, dits compartiments anodiques.

La présente invention vise plus particulièrement à simplifier la réalisation des couches de contact entre interconnecteurs de type plaques à canaux et cellules, et à en réduire le coût de fabrication, afin de réduire le coût de fabrication d'un électrolyseur EHT ou d'une pile à combustible SOFC qui en est munie et de diminuer les rebuts lors de la fabrication.

Elle vise également à améliorer le contact électrique entre un interconnecteur et une cellule électrochimique contre laquelle elle est en appui.

### Technique antérieure

Une pile à combustible SOFC ou un électrolyseur EHT est constitué d'un empilement de motifs élémentaires comportant chacun une cellule électrochimique à oxydes solides, constituée d'au moins trois couches superposées l'une sur l'autre anode/électrolyte/cathode, et de plaques d'interconnexion en alliages métalliques aussi appelées plaques bipolaires, ou interconnecteurs. Les interconnecteurs ont pour fonction d'assurer à la fois le passage du courant électrique et la circulation des gaz au voisinage de chaque cellule (vapeur d'eau injectée, hydrogène et oxygène extrait dans un électrolyseur EHT ; air et hydrogène injectés et eau extraite dans une pile SOFC) et de séparer les compartiments anodiques et cathodiques qui sont les compartiments de circulation des gaz du côté respectivement des anodes et des cathodes des cellules.

Pour réaliser l'électrolyse de la vapeur d'eau à haute température EHT, typiquement entre 600 et 950°C, on injecte de la vapeur d'eau H₂O dans le compartiment cathodique. Sous l'effet du courant appliqué à la cellule, la dissociation des molécules d'eau sous forme vapeur est réalisée à l'interface entre l'électrode à hydrogène (cathode) et l'électrolyte : cette dissociation produit du gaz dihydrogène H2 et des ions oxygène. Le dihydrogène est collecté et évacué en sortie de compartiment à hydrogène. Les ions oxygène O₂⁻ migrent à travers l'électrolyte et se recombinent en dioxygène à l'interface entre l'électrolyte et l'électrode à oxygène (anode).

Pour assurer le fonctionnement d'une pile à combustible SOFC, on injecte de l'air (oxygène) dans le compartiment cathodique et de l'hydrogène dans le compartiment anodique. L'hydrogène H2 va se transformer en ions H+ et libérer des électrons qui sont captés par l'anode. Les ions H+ arrivent sur la cathode où ils se combinent aux ions O₂⁻ constitués à partir de l'oxygène de l'air, pour former de l'eau. Le transfert des ions H+ et des électrons vers la cathode va produire un courant électrique continu à partir de l'hydrogène.

Les conditions de fonctionnement d'un électrolyseur EHT étant très proches de celles d'une pile à combustible SOFC, les mêmes contraintes technologiques se retrouvent, à savoir principalement la tenue mécanique aux cyclages thermiques d'un empilement de matériaux différents (céramiques et alliage métallique), le maintien de l'étanchéité entre les compartiments anodique et cathodique, la tenue au vieillissement des interconnecteurs métalliques et la minimisation des pertes ohmiques à diverses interfaces de l'empilement. Les aciers inoxydables ferritiques chromino-formeurs comptent parmi les alliages d'interconnecteurs les plus prometteurs pour les électrolyseurs EHT, compte tenu qu'ils ont déjà été utilisés avec succès en tant qu'alliages dans des piles à combustibles à haute température SOFC [1-3]. Parmi ces alliages d'interconnecteurs, ceux déjà commercialisés sous les dénominations Crofer 22 APU et Crofer 22 H à base Fe-22%Cr, par la société ThyssenKrupp VDM, ou celui sous la dénomination « Sanergy HT » à base Fe-22%Cr, par la société Sandvik, ou encore celui sous la dénomination K41X par la société APERAM pour des températures de fonctionnement comprises entre 600 et 900°C.

Ce type d'alliages peut présenter un coefficient d'expansion thermique voisin des matériaux de cellules et une relativement bonne résistance à la corrosion comparativement à d'autres matériaux métalliques. Néanmoins, il requiert un certain nombre de revêtements destinés d'une part à le protéger contre l'oxydation et à éviter l'évaporation du Cr en conditions de fonctionnement qui du côté oxydant vient polluer l'électrode à air et dégrade notablement son fonctionnement, et d'autre part un revêtement permettant de minimiser la résistance électrique entre l'interconnecteur et la cellule.

Il est connu que la résistance à l'oxydation sous air de ces alliages est assurée par la formation d'une couche superficielle d'oxydes riches en chrome (chromine Cr₂O₃ et oxyde spinelle (Cr,Mn)₃O₄) [4].

Cependant, avec de tels alliages nus, il est connu que des exigences de fonctionnement ne sont pas pleinement satisfaites sur la durée pour l'application aux interconnecteurs faisant face à l'électrode à oxygène, i.e. interconnecteurs cathodiques SOFC et interconnecteurs anodiques EHT. En premier lieu, il apparaît que la résistance spécifique de surface (ASR, acronyme anglais pour « Area Specific Résistance »), liée à la collection du courant, devient ainsi trop élevée du côté de l'électrode à oxygène [1,3]. De plus, l'ASR sous hydrogène humide, du côté de l'électrode à hydrogène, est supérieure à celui sous air [5]. D'autre part, la volatilité de la chromine Cr₂O₃ à la température de fonctionnement provoque un empoisonnement de l'électrode à oxygène EHT (anode EHT), qui s'accompagne d'une dégradation de ses performances, de manière comparable à celle observée pour l'électrode à oxygène SOFC (cathode SOFC).

La littérature décrit ainsi des revêtements d'une part, pour interconnecteurs de piles SOFC, et d'autre part, pour la face des interconnecteurs en regard de l'électrode à oxygène [6]. Ces revêtements ont uniquement pour fonction de limiter l'évaporation de chrome, d'assurer la conduction électronique et une bonne résistance à l'oxydation de l'alliage sous air, c'est-à-dire en atmosphère en compartiments cathodiques de piles SOFC. Parmi ces revêtements, il est connu de réaliser des dépôts conformes à la géométrie des interconnecteurs, de deux couches céramiques conductrices, l'une dite couche de protection dont la fonction est de protéger l'alliage métallique de l'oxydation (compartiment oxydant) et la seconde, dite couche de contact électrique en vue d'améliorer le contact électrique entre l'interconnecteur et la cellule dont la planéité ou l'état de surface sont souvent imparfaits, le défaut de planéité ou d'état de surface mesuré pouvant aller jusqu'à 40 micromètres.

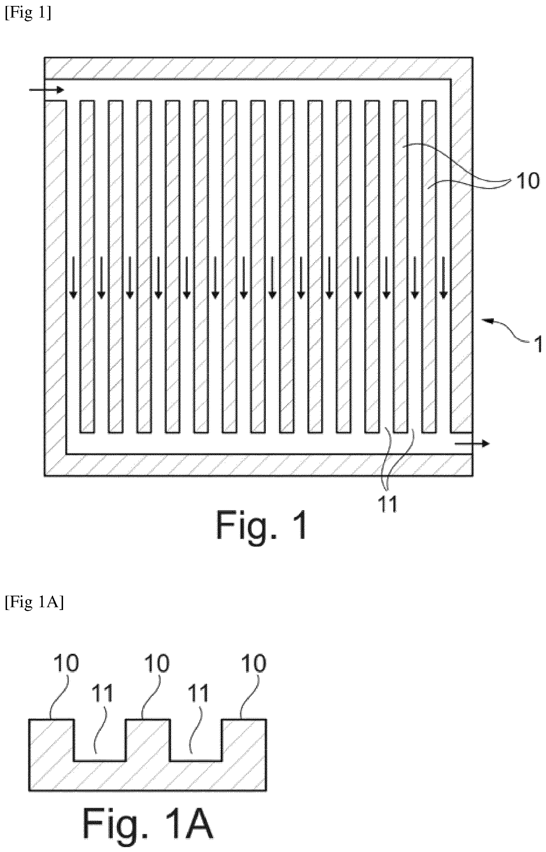

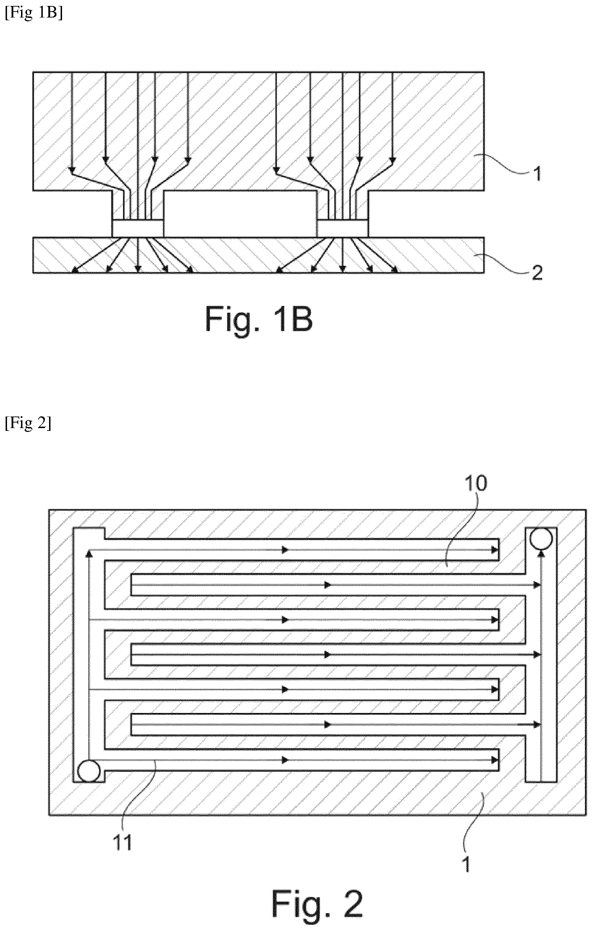

En ce qui concerne la géométrie des interconnecteurs, on a représenté en figures 1, 1A et 1B, une plaque à canaux 1 couramment utilisée à la fois dans les électrolyseurs EHT et dans les piles à combustibles SOFC. L'amenée ou la collecte du courant à l'électrode est réalisée par les dents ou nervures 10 qui sont en contact mécanique direct avec l'électrode concernée. L'amenée de vapeur d'eau à la cathode ou de gaz drainant à l'anode dans un électrolyseur EHT, l'amenée d'air (O₂) à la cathode ou d'hydrogène à l'anode dans une pile SOFC est symbolisée par les flèches en figure 1. La collecte de l'hydrogène produit à la cathode ou de l'oxygène produit à l'anode dans un électrolyseur EHT, la collecte de l'eau produite à la cathode ou de l'hydrogène en surplus à l'anode dans une pile SOFC est faite par les canaux 11 qui débouchent dans une connexion fluidique, couramment appelée clarinette, commune à l'empilement de cellules. La structure de ces interconnecteurs est faite pour réaliser un compromis entre les deux fonctions d'amenée et de collecte (gaz/courant).

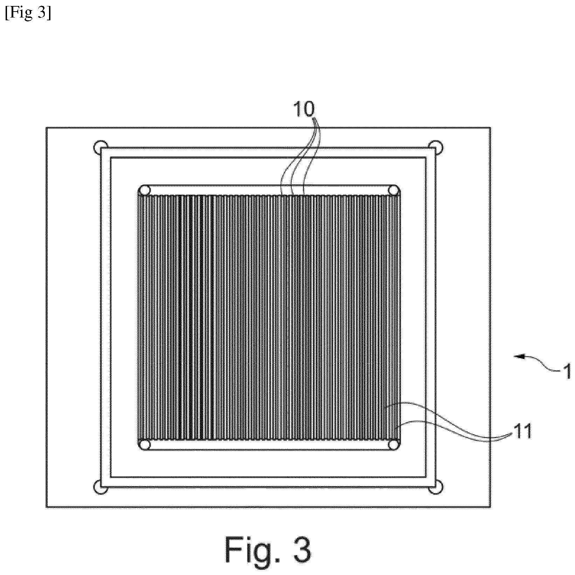

Une autre plaque interconnectrice 1 a déjà été proposée [7]. Elle est représentée en figure 2 avec la circulation du fluide représentée par les flèches : sa structure est de type interdigitée. Les inconvénients majeurs de cette plaque à canaux ou de structure interdigitée sont liés à leur technique de réalisation. Ainsi, ces structures de plaques nécessitent une épaisseur de matière importante, typiquement de 5 à 10 mm, pour la zone de collection des gaz produits et une mise en forme par usinage dans la masse, des canaux de distribution des gaz. Une représentation photographique d'une telle plaque usinée est donnée en figure 3. Les coûts de matière et d'usinage sont importants et directement reliés à la finesse de pas des canaux à usiner : plus particulièrement des distances entre canaux inférieures à 1 mm.

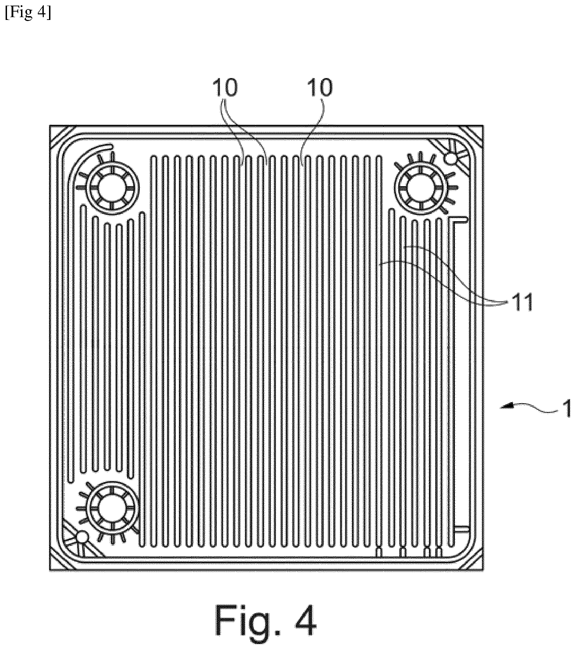

L'emploi de tôles minces, typiquement de 0,5 à 2 mm, embouties puis assemblées entre elles par soudage laser a déjà été éprouvé. Une représentation photographique d'une telle plaque obtenue par assemblage de tôles embouties est donnée en figure 4. Cette technique a pour avantage de limiter le coût de matière première mais ne permet pas d'atteindre une finesse de canaux aussi élevée que par usinage. De fait, les possibilités de réalisation pour la profondeur des canaux, la largeur unitaire de dent et le pas entre dents sont limitées. De plus, le coût de l'outillage d'emboutissage nécessite une production en grande série.

Bon nombre de développements ont été réalisés dans le but d'améliorer le contact électrique entre cellules et interconnecteurs et la gestion des fluides vers la cellule.

En particulier, le brevet FR2996065B1 au nom de la demanderesse divulgue en tant qu'interconnecteur, un composant à substrat en alliage métallique, dont l'élément de base est du Fer (Fe) ou du Nickel (Ni), avec une des faces planes principales revêtue d'une couche épaisse métallique ou en céramique, rainurée en délimitant des canaux adaptés pour la distribution et/ou la collecte de gaz, tels que vapeur d'eau H₂O, H₂; O₂, gaz drainant.

La demanderesse a mis en œuvre cette solution en particulier du côté de l'électrode à oxygène (anode en EHT, cathode pour une pile SOFC), avec une épaisse couche de contact en céramique à base de manganite de lanthane dopée strontium. Cette solution donne de bonnes performances avec une bonne homogénéité dans les empilements visés à oxydes solides (SOEC/SOFC) et ce pour de faibles coûts de réalisation.

Comme décrit dans ce brevet FR2996065B1, pour réaliser cette couche épaisse, on peut procéder par un dépôt par thermopressage suivie d'une étape de rainurage par ablation laser réalisée de sorte à délimiter des canaux adaptés pour la distribution et/ou la collecte de gaz. Cette technique a été privilégiée car elle permet un bon contrôle de l'épaisseur de la couche céramique ainsi qu'une bonne répétabilité de la géométrie des canaux.

Plus précisément, la couche de céramique est réalisée au préalable par coulage en bande d'un mélange de manganite de lanthane dopée strontium (LSM), d'un dispersant, de différents solvants, et d'un plastifiant.

Une fois la bande de LSM obtenue, elle est mise en place sur l'une des faces planes du substrat métallique par thermopressage.

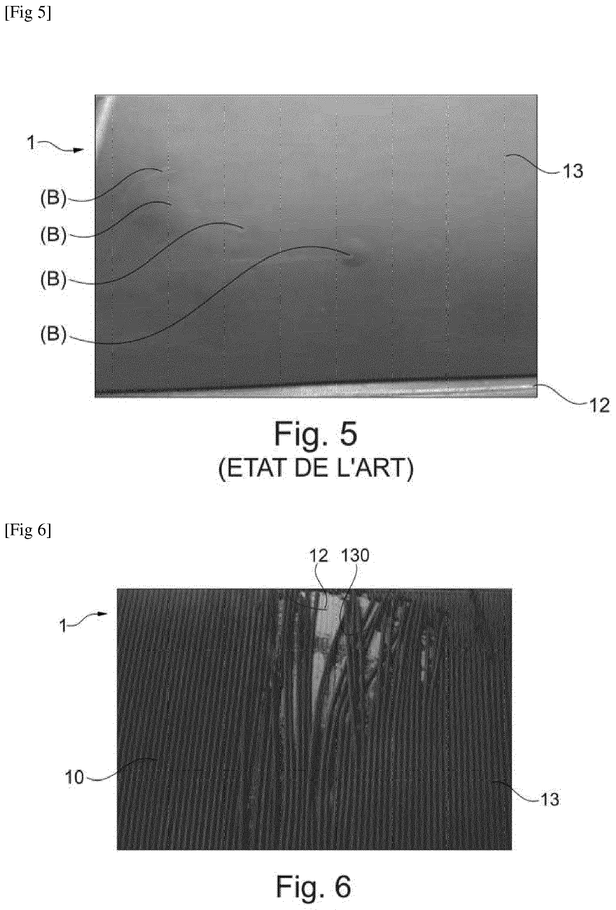

En pratique, les inventeurs ont pu constater que le process de thermopressage actuel n'était pas optimal. En effet, comme montré en figure 5, il a été mis en évidence une formation de bulles entre le substrat métallique de l'interconnecteur et la bande crue de LSM lors de l'évaporation de solvant. Sur cette figure 5, les bulles (B) sont piégées entre le substrat métallique 12 et la bande 13 en LSM de l'interconnecteur 1.

De fait, ces zones de bulles empêchent une bonne adhérence de la bande LSM sur l'interconnecteur.

Et, dans ces zones, lors du rainurage par ablation laser, il y a un fort risque d'un phénomène de décollement des canaux lors de leur réalisation. Ce phénomène est bien mis en évidence sur la figure 6 où l'on voit les portions 130 de bandes crues complètement décollées du substrat 12 sous-jacent.

Les inventeurs ont estimé que ce phénomène de décollement peut aller jusqu'à 50% de rebut en fabrication en série.

Il existe donc un besoin d'améliorer les interconnecteurs pour les piles SOFC ou les électrolyseurs EHT, réalisés selon l'enseignement du brevet FR2996065B1, notamment afin de diminuer la mise au rebut lors de la fabrication en série.

Le but de l'invention est de répondre au moins en partie à ce besoin.

### Exposé de l'invention

Pour ce faire, l'invention concerne, sous l'un de ses aspects, un procédé de réalisation d'un composant, destiné à constituer un interconnecteur pour pile à combustible (SOFC) ou électrolyseur à haute température (EHT), comportant les étapes suivantes :
a/ réalisation d'un substrat en alliage métallique, de type chromino-formeur, dont l'élément de base est du Fer (Fe) ou du Nickel (Ni), le substrat ayant deux faces planes principales,
b/ coulage en bande d'une couche épaisse en céramique;
c/ enlèvement localisé à un ou plusieurs endroits, de matière de la couche épaisse en céramique coulée en bande ;
d/ thermopressage de la bande crue en couche épaisse en céramique ;
e/ rainurage de la couche épaisse en céramique de sorte à délimiter des canaux adaptés pour la distribution et/ou la collecte de gaz, tels que vapeur d'eau H₂O, H2 ; Air.

Selon une variante de réalisation avantageuse, l'étape c/ est réalisée par ablation laser, de préférence au moyen d'un laser au CO₂. L'ablation laser permet de réaliser l'étape d'enlèvement de façon rapide, régulière, et précise.

Avantageusement, les zones de matière enlevées formant des trous qui présentent l'une ou l'autre des caractéristiques suivantes :
- chaque trou à une surface comprise entre 10⁻⁹ et 10 mm², de préférence de l'ordre de 10⁻⁵ mm² ;
- le nombre de trous est compris entre 0,01 et 1000 par cm² préférentiellement de 1 par cm², étant entendu que des trous plus grands en surface vont conduire à un nombre de trous moins importants.

Selon une autre variante de réalisation avantageuse, les zones de matière enlevées étant uniformément réparties sur la surface de la couche épaisse en céramique, ce qui facilite la réalisation du retrait de matière.

Par « uniformément réparties », on entend que les zones de matière enlevées suivent une distribution isotrope sur la surface de la couche épaisse en céramique. Ainsi, la répartition des zones de matière enlevées immédiatement voisines d'une zone de matière enlevée donnée est identique pour toutes les zones de matières enlevées, à l'exception de celles situées aux bords de la couche épaisse.

De préférence, les zones de matière enlevées ont chacune une forme de cylindre débouchant sur le substrat métallique.

De préférence encore, l'étape e/ est réalisée par ablation laser, avant de réaliser l'étape d/ de thermopressage. Il est préférable de réaliser l'ablation laser avant thermopressage pour éviter de dégrader le substrat de l'interconnecteur présent sous la couche de contact.

Selon une autre variante de réalisation avantageuse, l'étape d/ de thermopressage de la bande crue de céramique est réalisée à une température comprise entre 60 et 130°C. Avantageusement, l'étape d/ de thermopressage de la bande crue de céramique est réalisée pendant une durée inférieure à 2 heures.

L'invention a également pour objet un composant obtenu selon le procédé de réalisation qui vient d'être décrit, le matériau de la couche épaisse en céramique étant choisi parmi un manganite de lanthane de formule La₁₋ₓSrₓMO₃ avec M (métaux de transition) = Ni, Fe, Co, Mn, Cr, seul ou en mélange, ou des matériaux de structure lamellaire tels que les nickelates de lanthanide de formule Ln₂NiO₄ (Ln= La, Nd, Pr), ou un autre oxyde pérovskite conducteur électrique ou encore de toute électrode à oxygène pour pile à combustible fonctionnant entre 500 et 1000 °C.

De préférence, l'épaisseur de la couche en céramique étant comprise entre 30 et 800 µm.

On précise que dans le cadre de l'invention, on entend par « couche épaisse», une couche dont l'épaisseur est supérieure à celle d'une couche obtenue par une technologie dite « couche mince », typiquement l'épaisseur est comprise entre 2 et 15 µm.

L'invention consiste donc essentiellement à créer des zones dépourvues de matière de bande crue, qui facilitent l'évaporation de toute matière volatile telle que de l'air chaud, liant, solvant ou plastifiant, qui peuvent d'évaporer même partiellement lors du thermopressage pour éliminer à tout le moins limiter le phénomène de bulles.

Après le coulage en bande, on procède donc à un enlèvement de matière ponctuel de préférence à l'échelle micrométrique, dans la bande.

Après l'étape de thermopressage, le phénomène de bulles est inexistant.

Grâce à l'invention, le temps mis pour la mise en œuvre du thermopressage peut être considérablement réduit.

Les avantages de l'invention sont nombreux parmi lesquels on peut citer :
- un procédé viable à l'échelle industrielle ;
- du fait du temps considérablement réduit pour l'étape du thermopressage, un gain de temps global du procédé considérable par rapport au procédé selon le brevet FR2996065B1, typiquement jusqu'à un facteur de 60 ;
- une économie de matière et de temps passé au réapprovisionnement des bandes de céramique ;
- des taux de rebut de fabrication très faibles, typiquement inférieurs à 1%.

D'autres avantages et caractéristiques de l'invention ressortiront mieux à la lecture de la description détaillée d'exemples de mise en œuvre de l'invention faite à titre illustratif et non limitatif en référence aux figures suivantes.

### Brève description des dessins

[Fig 1] la figure 1 est une vue schématique de face d'une plaque interconnectrice d'un électrolyseur EHT selon l'état de l'art.
[Fig 1A] la figure 1A est une vue de détail en coupe d'une plaque interconnectrice selon la figure 1.
[Fig 1B] la figure 1B est une vue analogue à la figure 1A montrant les lignes de courant parcourant la plaque.
[Fig 2] la figure 2 est une vue schématique de face d'une autre plaque interconnectrice d'un électrolyseur selon l'état de l'art.
[Fig 3] la figure 3 est une reproduction photographique d'une plaque selon la figure 1, obtenue par usinage mécanique.
[Fig 4] la figure 4 est une reproduction photographique d'une plaque selon la figure 1, obtenue par emboutissage.
[Fig 5] la figure 5 est une reproduction photographique de face du côté d'une couche épaisse de LSM une fois l'étape de thermopressage réalisée conformément au procédé selon le brevet FR2996065B1.
[Fig 6] la figure 6 est une reproduction photographique de face du côté d'une couche épaisse de LSM une fois l'étape de rainurage des canaux réalisée conformément au procédé selon le brevet FR2996065B1.
[Fig 7] la figure 7 est une vue schématique montrant l'étape d'enlèvement localisé de matière de la couche épaisse en céramique selon l'invention ;
[Fig 8] la figure 8 est une reproduction photographique de face du côté d'une couche épaisse de LSM avant l'étape de thermopressage conformément au procédé selon l'invention.

### Description détaillée

Les figures 1 à 6 qui se rapportent à l'état de l'art ont déjà été commentées en préambule. Elles ne le sont donc pas décrites en détail ci-après.

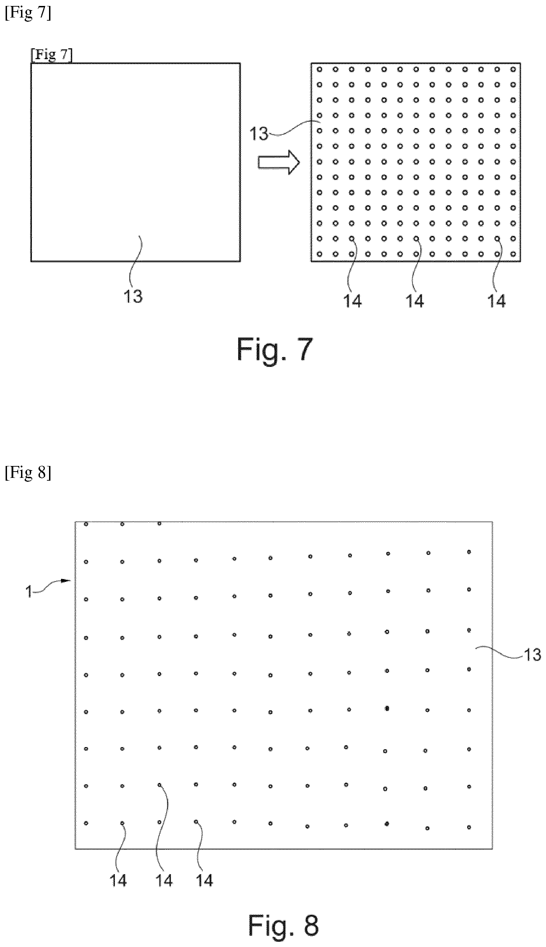

La figure 7 illustre un exemple d'enlèvement de matière localisé, d'une couche épaisse de céramique 13 qui a lieu après le coulage en bande de cette dernière, conformément à l'invention.

Cet enlèvement de matière a pour but de supprimer à tout le moins réduire le phénomène de bulles constaté, comme montré en figure 5 avec les conséquences montrées en figure 6. Les zones 14 dépourvues de couche épaisse sont de préférence uniformément réparties sur la couche 13 et ont de préférence la forme de cylindres débouchant sur le substrat en alliage métallique sous-jacent

On décrit ci-après les différentes étapes de réalisation d'un exemple d'une couche épaisse en céramique avec ses canaux, obtenue selon le procédé de l'invention dans les applications visées, i.e. piles à combustibles SOFC et électrolyseur EHT.

Etape a/ : on fournit un substrat 12 constitué d'un alliage ferritique commercial du type CROFER 22 APU, de 1.5 mm d'épaisseur.

Etape b/ : fabrication d'une bande crue de LSM.

On réalise le mélange entre un composé d'un poids de 60 g de manganite de lanthane de formule La_{0,8}Sr_{0,2}MnO₃ avec 0,8% en poids d'acide oléique en tant que dispersant, 15,7% de 2-butanone et 15,7% d'éthanol en tant que solvants.

Le mélange est broyé dans un broyeur de type planétaire. Le cycle de fonctionnement du broyeur planétaire est le suivant :
- vitesse de rotation : 400 tours par minute ;
- durée : 1 heure.

On effectue alors un ajout, dans le mélange broyé, d'un poids de 3,2g de polyvinyle de butyral (PVB 90), et de 5,5g de polyéthylène glycol (PEG 400) en tant que solvant puis on mélange le tout à l'aide d'un broyeur de type planétaire. Le cycle de fonctionnement du broyeur de type planétaire est le suivant :
- vitesse de rotation : 200 tours par minute ;
- durée : 10 heures.

On effectue ensuite une désaération du mélange à l'aide d'un mélangeur de type à rouleaux. Le cycle de fonctionnement du mélangeur à rouleaux est le suivant :
- vitesse de rotation : 20 tours par minute ;
- durée : 24 heures.

On réalise alors le coulage en bande de la suspension obtenue après désaération à l'aide d'un couteau racleur. La hauteur active du couteau est égale à 1000µm. La vitesse de coulage est égale à 1,5 m/mn. Le coulage s'effectue sur une feuille de polymère (polyester) siliconé afin de favoriser le décollement de la bande une fois séchée.

Puis, on effectue le séchage de la bande crue obtenue par coulage, à l'air ambiant pendant une durée de 3h.

La bande crue séchée de LSM est enfin découpée à des dimensions correspondantes à une électrode à air dans une pile SOFC, contre laquelle la bande est destinée à venir s'appuyer. La découpe peut par exemple être réalisée à l'aide d'une table de découpe laser.

Etape c/ : on enlève par ablation laser au moyen d'un laser CO2 de la matière de la couche épaisse en céramique coulée en bande.

Comme montré en figure 8, les zones 14 dépourvues de matière ont une forme cylindrique et sont réparties de manière uniforme sur la surface de la couche 13.

A titre d'exemple, chacune de ces zones 14 présente un diamètre de 0.1 mm et la densité des zones 14 est d'environ 1 par cm².

### Etape d/ : thermopressage

La bande crue de LSM est ensuite déposée sur le substrat 12 puis elle est soudée à celle-ci par thermopressage à l'aide d'une presse. L'épaisseur de la bande crue de LSM est de 325 µm.

Le cycle de fonctionnement de la presse est le suivant :
- force de pressage : 1kg/mm² ;
- durée d'application du pressage : 2 h
- température régulée des deux plateaux de presse : 80°C

Après refroidissement à la température ambiante, l'assemblage réalisé entre bande crue de LSM et tôle mince d'acier ferritique est retiré de la presse.

### Etape e/ : Obtention des rainures

On réalise un rainurage par ablation laser de la bande crue de LSM. L'ablation est réalisée à l'aide d'une table traçante équipée d'un laser au CO2 d'une puissance variable jusqu'à la puissance maximale de 50 Watt. La vitesse de déplacement du laser est également variable, jusqu'à la vitesse maximale de 2 cm/s. L'utilisation d'un tel appareil est particulièrement avantageuse car il permet par ses caractéristiques variables de fonctionnement de brûler, c'est-à-dire réaliser une abrasion, plus ou moins en profondeur les polymères constituant la bande crue, ce qui libère ainsi la charge associée, le LSM. On peut ainsi creuser des rainures (sillons) plus ou moins profondes. Le cas échéant, plusieurs passages du laser au CO2 sur la bande crue peuvent être effectués pour augmenter plus ou moins la profondeur et/ou la largeur des rainures.

Après cette étape e/, on constate que le taux de rebut des composants 1 ainsi fabriqués est inférieur à 1%.

L'invention n'est pas limitée aux exemples qui viennent d'être décrits ; on peut notamment combiner entre elles des caractéristiques des exemples illustrés au sein de variantes non illustrées.

D'autres variantes et améliorations peuvent être envisagées sans pour autant sortir du cadre de l'invention.

### Liste des références citées

[1]. J.W. Fergus, "Metallic interconnects for solid oxide fuel cells", Mater. Sci. Eng. A 397 (2005) 271-283.
[2]. W.J. Quadakkers, J. Piron-Abellan, V. Shemet, L. Singheiser, "Metallic interconnectors for solid oxide fuel cells - a review", Mat. High Temp. 20 (2) (2003) 115-127.
[3]. Z. Yang, K. Scott Weil, D.M. Paxton, J.W. Stevenson, "Selection and Evaluation of Heat-Resistant Alloys for SOFC Interconnect Applications", J. Electrochem. Soc. 150 (9) (2003) A1188-A1201.
[4]. J.E. Hammer, S.J. Laney, R.W. Jackson, K. Coyne, F.S. Pettit, G.H. Meier, "The Oxidation of Ferritic Stainless Steels in Simulated Solid-Oxide Fuel-Cell Atmospheres, Oxid. Met". 67(1/2) (2007) 1-38.
[5]. S.J. Geng et al., "Investigation on Haynes 242 Alloy as SOFC Interconnect in Simulated Anode Environment"», Electrochemical and Solid-State Letters, 9 (4) (2006) A211-A214.
[6]. N. Shaigan et al., "A review of recent progress in coatings, surface modifications and alloy developments for solid oxide fuel cell ferritic stainless-steel interconnects", J. Power Sources 195 (2010) 1529-1542.
[7]. Xiango Li, International Journal of hydrogen Energy 30 (2005) 359-371.

## Revendications

1. Procédé de réalisation d'un composant (1), destiné à constituer un interconnecteur pour pile à combustible (SOFC) ou électrolyseur à haute température (EHT), comportant les étapes suivantes :
a/ réalisation d'un substrat en alliage métallique (12), de type chromino-formeur, dont l'élément de base est du Fer (Fe) ou du Nickel (Ni), le substrat ayant deux faces planes principales,
b/ coulage en bande d'une couche épaisse en céramique (13);
c/ enlèvement localisé à un ou plusieurs endroits (14), de matière de la couche épaisse en céramique coulée en bande ;
d/ thermopressage de la bande crue en couche épaisse en céramique ;
e/ rainurage de la couche épaisse en céramique de sorte à délimiter des canaux adaptés pour la distribution et/ou la collecte de gaz, tels que vapeur d'eau H₂O, H2 ; Air.

2. Procédé selon la revendication 1, l'étape c/ étant réalisée par ablation laser.

3. Procédé selon la revendication 2, l'étape c/ étant réalisée au moyen d'un laser au CO₂.

4. Procédé selon l'une des revendications précédentes, les zones de matière enlevées formant des trous, chaque trou ayant une surface comprise entre 10⁻⁹ et 10 mm², le nombre de trous étant de préférence compris entre 0,01 et 1000 par cm.

5. Procédé selon l'une des revendications précédentes, les zones de matière enlevées étant uniformément réparties sur la surface de la couche épaisse en céramique.

6. Procédé selon l'une des revendications précédentes, les zones de matière enlevées ayant chacune une forme de cylindre débouchant sur le substrat métallique.

7. Procédé selon l'une des revendications précédentes, l'étape e/ étant réalisée par ablation laser avant de réaliser l'étape d/ de thermopressage.

8. Procédé selon l'une des revendications précédentes, l'étape d/ de thermopressage de la bande crue de céramique étant réalisée à une température comprise entre 60 et 130°C.

9. Procédé selon l'une des revendications précédentes, l'étape d/ de thermopressage de la bande crue de céramique étant réalisée pendant une durée inférieure à 2h.

10. Composant obtenu selon le procédé de réalisation selon l'une des revendications précédentes, le matériau de la couche épaisse en céramique étant choisi parmi un manganite de lanthane de formule La1-xSrxMO3 avec M (métaux de transition) = Ni, Fe, Co, Mn, Cr, seul ou en mélange, ou des matériaux de structure lamellaire tels que les nickelates de lanthanide de formule Ln₂NiO₄ (Ln= La, Nd, Pr), ou un autre oxyde pérovskite conducteur électrique.

11. Composant selon l'une des revendications précédentes, l'épaisseur de la couche en céramique étant comprise entre 30 et 800 µm.

## Patentansprüche

1. Verfahren zur Herstellung einer Komponente (1), die als Stromsammler für eine Brennstoffzelle (SOFC) oder einen Hochtemperaturelektrolyseur (HTE) dienen soll, das die folgenden Schritte umfasst:
a/ Herstellen eines Substrats aus einer Metalllegierung (12) des Chromoxid-bildenden Typs, wobei das Basiselement Eisen (Fe) oder Nickel (Ni) ist, wobei das Substrat zwei ebene Hauptflächen aufweist;
b/ Bandgießen einer Keramik-Dickschicht (13);
c/ lokalisiertes Abtragen von Material der bandgegossenen Keramik-Dickschicht an einer oder mehreren Stellen (14);
d/ Heißpressen des Band-Grünkörpers zu einer Keramik-Dickschicht und
e/ Herstellung von Rillen in der Keramik-Dickschicht, um Kanäle abzugrenzen, die zum Verteilen und/oder zum Sammeln von Gasen, wie Wasserdampf H₂O, H₂; Luft, geeignet sind.

2. Verfahren nach Anspruch 1, wobei Schritt c/ mittels Laserablation durchgeführt wird.

3. Verfahren nach Anspruch 2, wobei Schritt c/ mithilfe eines CO₂-Lasers durchgeführt wird.

4. Verfahren nach einem der vorhergehenden Ansprüche, wobei die abgetragenen Materialzonen Löcher bilden, wobei jedes Loch eine Oberfläche zwischen 10⁻⁹ und 10 mm² besitzt, wobei die Anzahl der Löcher vorzugsweise zwischen 0,01 und 1000 pro cm beträgt.

5. Verfahren nach einem der vorhergehenden Ansprüche, wobei die abgetragenen Materialzonen gleichmäßig auf der Oberfläche der Keramik-Dickschicht verteilt sind.

6. Verfahren nach einem der vorhergehenden Ansprüche, wobei die abgetragenen Materialzonen jeweils zylinderförmig sind und auf das Metallsubstrat münden.

7. Verfahren nach einem der vorhergehenden Ansprüche, wobei Schritt e/ mittels Laserablation vor der Durchführung des Heißpressschritts d/ durchgeführt wird.

8. Verfahren nach einem der vorhergehenden Ansprüche, wobei der Heißpressschritt d/ des Keramikband-Grünkörpers bei einer Temperatur zwischen 60 und 130 °C durchgeführt wird.

9. Verfahren nach einem der vorhergehenden Ansprüche, wobei der Heißpressschritt d/ des Keramikband-Grünkörpers für einen Zeitraum von weniger als 2 Std. durchgeführt wird.

10. Komponente, die gemäß dem Herstellungsverfahren nach einem der vorhergehenden Ansprüche erhalten wird, wobei das Material der Keramik-Dickschicht aus einem Lanthanmanganit der Formel La1-xSrxMO3, wobei M (Übergangsmetalle) = Ni, Fe, Co, Mn, Cr allein oder im Gemisch, oder Materialien mit lamellärer Struktur, wie Lanthanidnickelaten der Formel Ln2NiO4 (Ln = La, Nd, Pr) oder einem anderen elektrisch leitfähigen Perowskitoxid ausgewählt ist.

11. Komponente nach einem der vorhergehenden Ansprüche, wobei die Dicke der Keramikschicht zwischen 30 und 800 µm beträgt.

## Claims

1. Process for preparing a component (1), intended to constitute an interconnector for a fuel cell (SOFC) or a high-temperature electrolyser (HTE), comprising the following steps:
a/ preparing a substrate made of metal alloy (12), of chromia-forming type, the base element of which is iron (Fe) or nickel (Ni), the substrate having two main flat faces,
b/ tape casting a thick ceramic layer (13);
c/ localized removal at one or more locations (14), of material of the tape-cast thick ceramic layer;
d/ hot pressing the green thick ceramic layer tape;
e/ grooving the thick ceramic layer so as to delimit channels that are suitable for distributing and/or collecting gases, such as H₂O steam, H₂; air.

2. Process according to Claim 1, step c/ being carried out by laser ablation.

3. Process according to Claim 2, step c/ being carried out by means of a CO₂ laser.

4. Process according to one of the preceding claims, the removed material zones forming holes, each hole having a surface area of between 10⁻⁹ and 10 mm², the number of holes being preferably between 0.01 and 1000 per cm.

5. Process according to one of the preceding claims, the removed material zones being uniformly distributed on the surface of the thick ceramic layer.

6. Process according to one of the preceding claims, the removed material zones each having a cylinder shape opening onto the metal substrate.

7. Process according to one of the preceding claims, step e/ being carried out by laser ablation before carrying out the hot-pressing step d/.

8. Process according to one of the preceding claims, step d/ of hot pressing the green ceramic layer being carried out at a temperature between 60 and 130°C.

9. Process according to one of the preceding claims, step d/ of hot pressing the green ceramic layer being carried out for a time of less than 2 h.

10. Component obtained according to the preparation process according to one of the preceding claims, the material of the thick ceramic layer being chosen from a lanthanum manganite of formula La₁₋ₓSrₓMO₃ with M (transition metals) = Ni, Fe, Co, Mn, Cr, alone or as a mixture, or materials of lamellar structure such as lanthanide nickelates of formula Ln₂NiO₄ (Ln= La, Nd, Pr), or another electrically conductive perovskite oxide.

11. Component according to one of the preceding claims, the thickness of the ceramic layer being between 30 and 800 µm
